# EUROPÄISCHE PATENTSCHRIFT

(11) **EP 2 312 536 B1**
(45) Veröffentlichungstag und Bekanntmachung des Hinweises auf die Patenterteilung: **17.07.2013**
(21) Anmeldenummer: 09450197.0
(22) Anmeldetag: 15.10.2009
(51) Int. Cl.: G07B 15/00, G07C 5/08, B60R 1/12

(54) **Fahrzeuggerät für ein Strassenmautsystem**
Vehicle device for a street toll system
Appareil de véhicule pour système de péage de routes

(43) Veröffentlichungstag der Anmeldung: 20.04.2011
(73) Patentinhaber: Kapsch TrafficCom AG, 1120 Wien (AT)
(72) Erfinder: Polt, Michael, 1050 Wien (AT); Schrödl, Sören, 2340 Mödling (AT); Güner, Refi-Tugrul, 2500 Baden (AT); Nagy, Oliver, 1190 Wien (AT)
(74) Vertreter: Weiser, Andreas

(56) Entgegenhaltungen:
- EP-A1- 1 276 320
- EP-A1- 2 107 504
- DE-A1-102005 000 651
- DE-A1-102007 035 738
- US-A1- 2008 181 533
- US-A1- 2008 212 215

## Beschreibung

Die vorliegende Erfindung betrifft ein Fahrzeuggerät für ein Straßenmautsystem, mit zumindest einem Sendeempfänger zum Absetzen von mautrelevanten Daten an Sendeempfangsstationen zur Weiterleitung an eine Zentrale des Straßenmautsystems und zumindest einer Kamera, welche auf eine Umgebung vor einem das Fahrzeuggerät mitführenden Fahrzeug gerichtet ist und zumindest eine Bildaufnahme zumindest eines Ausschnitts der Umgebung erstellen kann.

Ein derartiges Fahrzeuggerät ist aus der US 2008/0212215 A1 bekannt.

Fahrzeuggeräte für Straßenmautsysteme, sog. "onboardunits" (OBUs), werden zur Verortung von Fahrzeugen und Erzeugung von ortsspezifischen Gebührentransaktionen wie Wegemaut, Eintrittsmaut oder Parkgebühren eingesetzt. Die Erfindung setzt sich zum Ziel, eine neuartige Form von Fahrzeuggerät zu schaffen, welche einen erweiterten Einsatzbereich hat.

Dieses Ziel wird gemäß der Erfindung mit einem Fahrzeuggerät mit den Merkmalen des Anspruchs 1 und einem Verfahren mit den Merkmalen des Anspruchs 18 erreicht.

Die Erfindung eröffnet eine Vielzahl neuer Möglichkeiten für die Kontrolle und Ahndung von Mautvergehen. Mit einer nach vorne gerichteten Kamera ausgestattete OBUs können die Straßenbenutzung *anderer* Fahrzeuge protokollieren und/oder an die Zentrale melden, wodurch eine Vielzahl potentieller Kontrollorgane geschaffen wird. Das erfindungsgemäße Fahrzeuggerät erfaßt dabei automatisch ein "aufnehmenswertes" Fahrzeug eines Vordermanns in einer Fahrzeugkolonne: Die Bildaufnahme wird genau dann ausgelöst, wenn in einer sich bewegenden Fahrzeugkolonne vor dem Fahrzeug ein Vordermann fährt. Es ist nicht notwendig, daß sämtliche OBUs des Straßenmautsystem auf diese Weise ausgerüstet oder eingesetzt werden, es genügt beispielsweise, OBUs von speziellen Benutzergruppen mit derartigen Kameras auszustatten, z.B. OBUs von Einsatz- oder öffentlichen Dienstfahrzeugen.

In einer bevorzugten Ausführungsform der Erfindung enthält das Fahrzeuggerät einen Speicher zur Archivierung der Bildaufnahme(n). Bildaufnahmen können so für eine spätere Auswertung oder Stapelübertragung zur Zentrale gesammelt werden.

Alternativ oder zusätzlich sendet der Sendeempfänger die Bildaufnahme(n) bevorzugt an die Zentrale. Dadurch können die aufgenommenen Bilder zentral sofort ("online") oder zeitversetzt im Stapel ("batch") ausgewertet werden.

Eine besonders bevorzugte Variante der Erfindung zeichnet sich dadurch aus, daß zumindest eine weitere Kamera auf den Fahrgastraum des Fahrzeugs gerichtet ist.

Diese Ausführungsform der Erfindung eignet sich besonders für das Enforcement von HOT-Lanes. HOT-Lanes sind an sich für Fahrzeuge mit mehreren Insassen reservierte Fahrspuren, die aber auch von Fahrzeugen mit weniger Insassen benützt werden dürfen, soferne eine - dementsprechend insassenabhängige - Benutzungsmaut entrichtet wird. Für die ordnungsgemäße Vermautung der Benutzung einer HOT-Lane ist daher in der Regel die Einstellung der Insassenzahl in der OBU erforderlich. Um die korrekte Einstellung der OBU zu kontrollieren und Mautvergehen an HOT-Lanes zu ahnden, besteht derzeit nur die Möglichkeit, die Fahrzeuge vom Straßenrand aus visuell zu kontrollieren, was überaus zeitaufwendig und für größere Straßenmautsysteme praktisch nicht durchführbar ist. Es wurde daher bereits vorgeschlagen, elektronische Bildverarbeitungssysteme einzusetzen, welche die Insassen in einer Bildaufnahme des Fahrzeugs von außerhalb des Fahrzeugs automatisch erkennen und zählen. Reflexionen an der Windschutzscheibe und Abschattungen der rückwärtigen Insassen führen jedoch häufig zu Erkennungsfehlern, was diese Systeme für einen großmaßstäbigen kommerziellen Einsatz unbrauchbar macht.

Die Erfindung geht einen anderen Weg und ermöglicht durch eine in der OBU angeordnete weitere Kamera auch eine direkte Erfassung der Fahrzeuginsassen vom Fahrzeuginneren aus. Sichtprobleme durch Windschutzscheibenreflexionen entfallen zur Gänze. Da es überdies im Interesse des Fahrers liegt, alle vorhandenen Insassen in das Blickfeld der OBU-Kamera zu rücken, um in den Genuß einer geringeren HOT-Maut zu gelangen, entfallen in der Regel auch die bisher mit Außenkontrollen verbundenen Abschattungsprobleme.

Demgemäß wird bevorzugt vorgesehen, daß der weiteren Kamera eine Auswerteeinrichtung nachgeschaltet ist, welche Fahrzeuginsassen in der Bildaufnahme detektiert und besonders bevorzugt zählt.

Eine solche Auswerteeinrichtung kann bevorzugt auch dazu eingesetzt werden, die detektierten Fahrzeuginsassen. in der Bildaufnahme unkenntlich zu machen bzw. zu anonymisieren, um Datenschutz bzw. Privatsphäre zu ermöglichen.

Andere Anwendungszwecke, beispielsweise die Überwachung des allgemeinen Verkehrsgeschehens unter Gewährleistung von Datenschutz, können erfüllt werden, wenn gemäß einer weiteren bevorzugten Ausführungsform der Erfindung der auf die Fahrzeugumgebung gerichteten Kamera eine Auswerteeinrichtung nachgeschaltet ist, welche Kennzeichen von Fremdfahrzeugen in der Bildaufnahme detektiert und optional unkenntlich macht bzw. anonymisiert.

Bei beiden Varianten der Erfindung ist es besonders vorteilhaft, wenn das Fahrzeuggerät im Bereich der Windschutzscheibe des Fahrzeugs befestigbar und die Kamera(s) auf seiner Vorder- und/oder Rückseite angeordnet ist/sind. Dadurch können die korrekten Blickrichtungen nach vorne und in den Fahrgastraum auf einfache Art und Weise erreicht werden.

Besonders günstig ist es, wenn die Kamera zu periodischen, vordefinierten oder zufälligen Zeitpunkten jeweils eine oder mehrere Bildaufnahme(n) erstellt, welche beispielsweise archiviert oder an die Zentrale gesendet wird. Alternativ kann die Kamera auf eine über den Sendeempfänger erhaltene Anforderung hin zumindest eine Bildaufnahme erstellen, sodaß eine zentrale Verwaltung des Systems möglich ist.

Eine weitere vorteilhafte Ausführungsform der Auslösung der Kamera besteht darin, daß das Fahrzeuggerät einen Objektdetektor aufweist, welcher bei Detektion eines vorgegebenen Objekts in der Nähe des Fahrzeugs die Kamera zu(r) Bildaufnahme(n) veranlaßt. Ein solches Objekt kann beispielsweise ein RFID- (radio frequency identification) oder DSRC- (dedicated short range communication) -Tag sein, z.B. ein in ein Verkehrsschild integrierter RFID- oder DSRC-Transponderchip, und der Objektdetektor ist demgemäß bevorzugt ein RFID- oder DSRC-Detektor zur Funkerkennung eines RFID- oder DSCR-Objekts. Alternativ kann das vorgegebene Objekt ein sichtbares Objekt sein, z.B. ein bestimmtes Verkehrsschild, und der Objektdetektor ist bevorzugt ein optischer Detektor zur Erkennung des Auftretens eines sichtbaren Objekts in der Fahrzeugumgebung.

Eine weitere besonders vorteilhafte Variante der Erfindung zeichnet sich dadurch aus, daß das Fahrzeuggerät einen Beschleunigungssensor enthält, welcher bei einer schwellwertüberschreitenden Beschleunigung die Kamera zu(r) Bildaufnahme(n) veranlaßt. Dadurch kann eine mit einer oder mehreren Kameras ausgestattete OBU als Unfallaufzeichnungsgerät ("Crashrecorder") arbeiten, welches bei einem Unfall Bilder der Fahrzeugumgebung und/oder des Fahrgastinnenraums für Beweiszwecke aufnimmt und zur Alarmierung auch an die Zentrale senden kann.

Gemäß einem weiteren bevorzugten Merkmal der Erfindung enthält das Fahrzeuggerät einen Satellitennavigationsempfänger, um die Bildaufnahme(n) mit Orts- und Zeitdaten ihrer Erstellung zu versehen, was ihre Beweiskraft erhöht und damit das Enforcement des Mautsystems erleichtert.

Als Sendeempfänger, über welchen das Fahrzeuggerät mit den Sendeempfangstationen der Zentrale kommunizieren kann, eignen sich alle Arten von in der Technik bekannten Sendeempfängern. Bevorzugt ist der Sendeempfänger ein DSRC- (dedicated short range communication), WAVE- (wireless access for vehicle environments) oder Mobilfunk-Sendeempfänger nach einem beliebigen Mobilfunkstandard wie GSM, GPRS, UMTS, WiMax usw. Demgemäß können auch die hier betrachteten Sendeempfangsstationen der Zentrale sowohl lokal verteilte DSRC- oder WAVE-Baken als auch Basisstationen eines Mobilfunknetzes sein.

Die Kamera(s) und der genannte optische Detektor können von jeder in der Technik bekannten Art sein, beispielsweise CCD-Kameras. In bestimmen Anwendungen können Störeinstrahlungen vermindert werden, wenn die Kamera(s) und/oder der optische Detektor für schmalbandiges Licht, insbesondere Infrarotlicht, ausgebildet sind. Auch ist es möglich, für die Kamera(s) und/oder den optischen Detektor sog. "Time-of-Flight"-Kameras einzusetzen, welche 3D-Bildaufnahmen erzeugen.

Die Erfindung wird nachstehend anhand eines in den beigeschlossenen Zeichnungen dargestellten Ausführungsbeispieles näher erläutert. In den Zeichnungen zeigt:
Fig. 1 ein mit einem erfindungsgemäßen Fahrzeuggerät ausgestattetes Fahrzeug im Rahmen eines schematisch dargestellten Straßenmautsystems;
Fig. 2 ein Blockschaltbild des Fahrzeuggeräts von Fig. 1;
die Fig. 3 und 4 das Fahrzeuggerät der Fig. 1 und 2 in der Rück- und Vorderansicht in seiner Montagestellung an einer Windschutzscheibe; und
die Fig. 5 und 6 zwei beispielhafte Bildaufnahmen des Fahrzeuggeräts der Fig. 1 - 4.

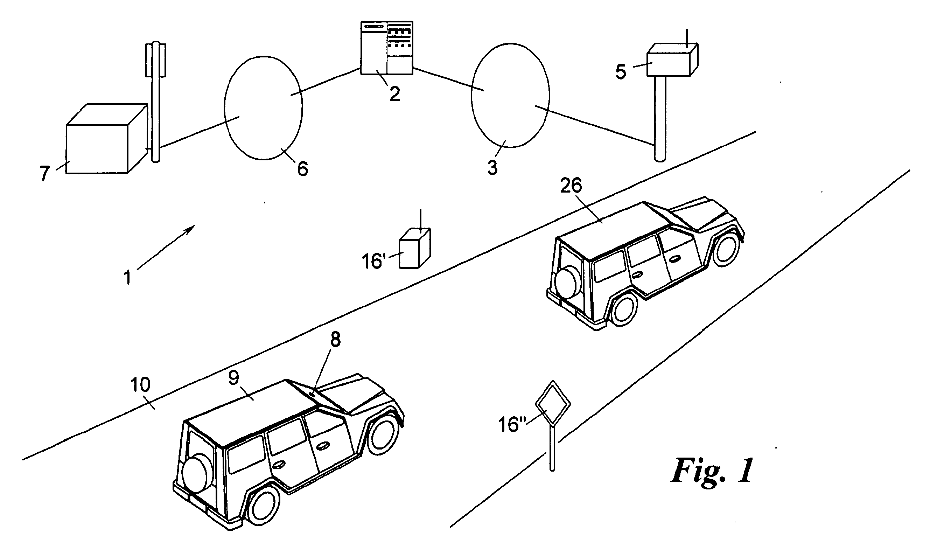

Fig. 1 zeigt ein beispielhaftes und nur ausschnittsweise dargestelltes Straßenmautsystem 1 mit zumindest einer Zentrale 2, die über ein erstes Datennetz 3, beispielsweise ein Intranet, mit einer Vielzahl von straßenseitigen Sendeempfangsstationen 5, beispielsweise DSRC- oder WAVE-Funkbaken, in Verbindung steht. Alternativ oder zusätzlich kann die Zentrale 2 über ein zweites Datennetz 6 mit einer Vielzahl von Sendeempfangsstationen 7, beispielsweise Basisstationen eines GSM-Mobilfunknetzes, in Verbindung stehen. Über die Sendeempfangsstationen 5, 7 kann die Zentrale 2 mit Fahrzeuggeräten bzw. OBUs 8 kommunizieren, die von Fahrzeugen 9 mitgeführt werden, um deren Benützung von Verkehrsflächen 10 wie Straßen, Autobahnen, Parkplätzen usw. zu vergebühren.

Die OBUs 8 können für die Zwecke der vorliegenden Erfindung von beliebiger Art sein, z.B. OBUs mit Kurzreichweitenkommunikation, welche von Sendeempfangsstationen 5 in Form von z.B. DSRC-Funkbaken lokalisiert werden können, die den Ort der OBU 8 an die Zentrale 2 zur Vergebührung melden. Alternativ kann es sich bei den OBUs 8 auch um sog. "thin clients" oder "thick clients" handeln, welche selbst ihren Ort bestimmen können, beispielsweise durch Identifizieren des Orts der Funkbaken 5, durch Selbst-Lokalisierung in einem Mobilfunknetz mit Hilfe der Sendeempfangsstationen 7, oder auch mit Hilfe eines eigenen Satellitennavigationsempfängers für ein globales Satellitennavigationssystem (global navigation satellite system, GNSS). Thick-client-OBUs 8 können mit Hilfe eigener Landkarten gebührenpflichtige Straßensegmente feststellen, die Mautgebühr ermitteln und an die Zentrale 2 senden. Thin-client-OBUs 8 können ihre Positionen bzw. die gefahrenen Route (tracks) direkt der Zentrale 2 zur Auswertung übermitteln senden und in der Zentrale 2 wird daraus die Mautgebühr ermittelt. Alle diese verschiedenen Arten von Datensendungen an die Zentrale 2 werden hier unter dem allgemeinen Begriff des "Absetzens von mautrelevanten Daten" von einer OBU 8 an die Zentrale 2 zusammengefaßt.

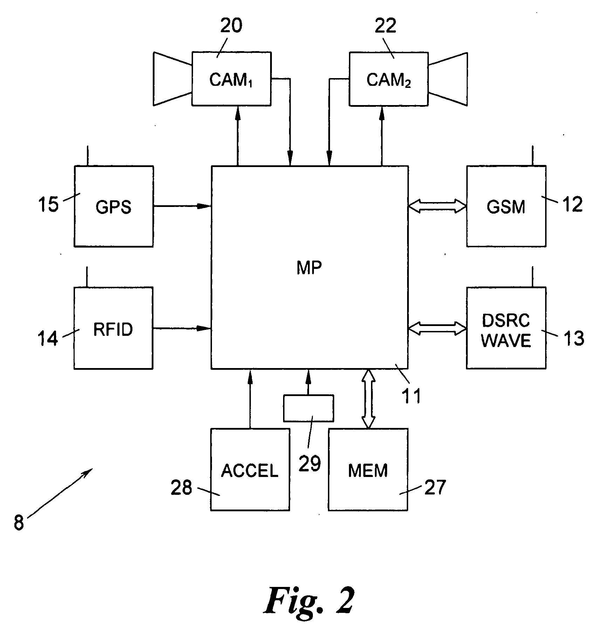

Der Aufbau einer OBU 8 ist in den Fig. 2 bis 4 im Detail gezeigt. Fig. 2 zeigt ein Blockschaltbild einer OBU 8 mit zum Teil optionalen Komponenten; vereinfachte Ausführungsformen der OBU 8 haben nicht notwendigerweise alle in Fig. 2 dargestellten Komponenten.

Gemäß Fig. 2 umfaßt das Fahrzeuggerät 8 einen zentralen Mikroprozessor 11, der mit einem oder mehreren Sendeempfängern 12, 13 zusammenwirkt, um mautrelevante Daten an die Zentrale 2 abzusetzen. Die Sendeempfänger 12, 13 sind beispielsweise ein Mobilfunk-Sendeempfänger 12 nach dem z.B. GSM-Standard und/oder ein Kurzreichweitenfunk-Sendeempfänger 13 nach dem DSRC-, WAVE- oder Infrarot-Standard und/oder ein RFID-Sendeempfänger 14.

Zur Selbst-Lokalisierung bzw. Verortung der OBU kann diese ferner mit einem Satellitennavigationsempfänger 15 ausgestattet sein und/oder dazu den RFID-Sendeempfänger 14 verwenden, letzterer zur Detektion von straßenseitigen RFID-Objekten 16' (Fig. 1) mit bekanntem Ort, z.B. RFID-Transponderchips mit eingespeicherten Positionsdaten.

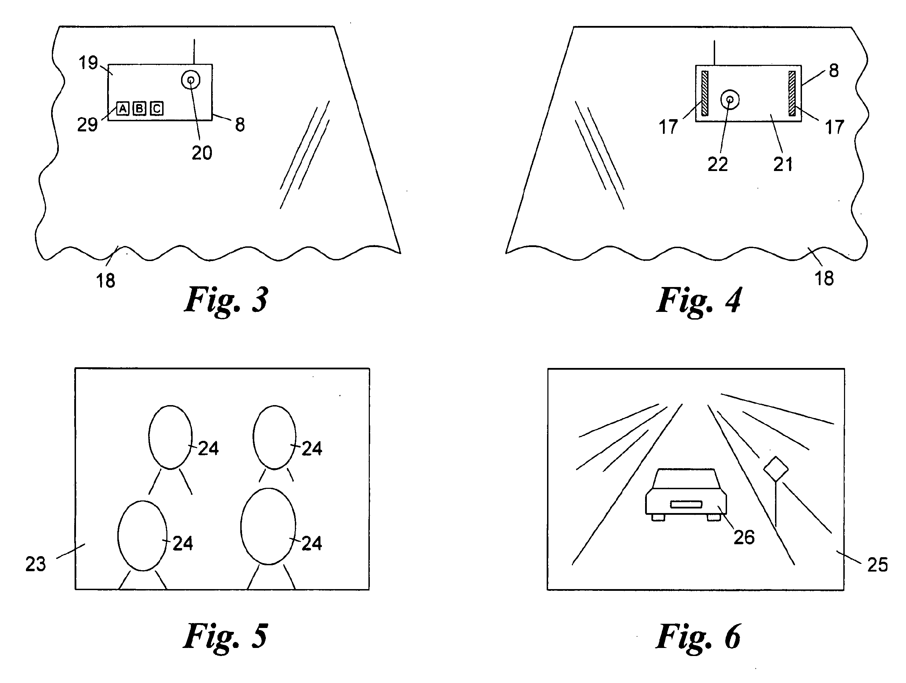

Wie in den Fig. 3 und 4 gezeigt, wird die OBU 8 z.B. mit Hilfe von Klebestreifen 17 von innen an die Windschutzscheibe 18 des Fahrzeugs 9 geklebt. Auf ihrer dem Fahrgastraum des Fahrzeugs 9 zugewandten Rückseite 19 ist die OBU 8 mit einer ersten Kamera 20 und/oder auf ihrer in Fahrtrichtung nach vorne weisenden Vorderseite 21 mit einer zweiten Kamera 22 ausgestattet. Weitere Kameras können beispielsweise an den Seiten des Fahrzeuggeräts 8 seitwärts gerichtet angeordnet sein.

Die erste Kamera 20 nimmt in dieser Position ein Bild 23 (Fig. 5) des Fahrgastraumes des Fahrzeugs 9 auf, in welchem z.B. die Anzahl an Fahrzeuginsassen 24 mit Hilfe herkömmlicher Bildverarbeitungsmittel bestimmt werden kann. Die zweite Kamera 22 nimmt in dieser Position ein Bild 25 der Fahrzeugumgebung vor dem Fahrzeug 9 auf, z.B. ein vor dem Fahrzeug 9 auf der Straße 10 fahrendes Fremdfahrzeug 26 ("Vordermann").

Die Bildaufnahmen 23, 25 der Kameras 20, 22 werden optional in einem Speicher 27 der OBU 8 für spätere Auswertungszwecke archiviert. Alternativ oder zusätzlich werden sie - sofort nach der Aufnahme oder zu einem späteren Zeitpunkt, z.B. im Speicher 27 gesammelt als Stapel (batch) - über einen oder mehrere der Sendeempfänger 12, 13, 14 und eine oder mehrere der Sendeempfangsstationen 5, 7 an die Zentrale 2 zur Auswertung gesandt.

Die Kameras 20, 22 werden vom Mikroprozessor 11 und/oder einer oder mehreren der daran angeschlossenen Komponenten insbesondere nach folgenden Kriterien zu einer Aufnahme eines oder mehrere der Bilder 23, 25 veranlaßt:
a) Bildaufnahmen können zeitgesteuert periodisch oder zu zufälligen Zeitpunkten erstellt werden;
b) die Zentrale 2 und/oder ihre Sendeempfangsstationen 5, 7 können Anforderungen an die OBU 8 senden, welche diese über ihre Sendeempfänger 12, 13, 14 empfängt und daraufhin Bildaufnahmen macht;
c) der Satellitennavigationsempfänger 15 kann in Verbindung mit dem Mikroprozessor 11 den bestimmten vordefinierten Positionen Bildaufnahmen veranlassen;
d) ein in der OBU 8 enthaltener Objektdetektor kann bei Detektieren eines vorgegebenen Objekts in der Nähe des Fahrzeugs 9, z.B. beim Erkennen des RFID-Objekts 16' oder eines sichtbaren Objekts 16", z.B. eines Straßenschildes, Bildaufnahmen auslösen; ein solcher Objektdetektor kann beispielsweise durch den RFID-Sendeempfänger 14 gebildet sein, welcher das Auftreten eines RFID-Objekts 16' erkennt, oder durch die auf die Fahrzeugumgebung gerichtete Kamera 22 selbst, welche im Zusammenwirken mit dem Mikroprozessor 11 ein sichtbares Objekt 16" mit Hilfe von Bildverarbeitungsmitteln erkennt und daraufhin eine Bildaufnahme 23 der Kamera 20 und/oder der Kamera 22 veranlaßt;
e) ein solcher von der Kamera 22 gebildeter Objektdetektor kann bevorzugt auch genau dann eine Bildaufnahme veranlassen, wenn er das Auftreten eines in einer bewegten Umgebung des Fahrzeugs 9 etwa stationär bleibenden Objekts, wie eines vorausfahrenden Fremdfahrzeugs 26, detektiert;
f) ein optionaler Beschleunigungssensor 28 kann dazu verwendet werden, im Falle einer einen vorgegebenen Schwellwert überschreitenden Beschleunigung, wie sie bei einem Aufprall bzw. Crash des Fahrzeugs 9 auftritt, eine Bildaufnahme der Kamera 20 und/oder der Kamera 22 zu veranlassen, z.B. zu Beweiszwecken und/oder um damit eine Unfallmeldung an die Zentrale 2 abzusetzen.

Der Satellitennavigationsempfänger 15 kann dazu herangezogen werden, jede der Bildaufnahmen 23, 25 der Kameras 20, 22 zusätzlich mit Orts- und Zeitdaten ihrer Erstellung zu versehen.

Zum Absenden der Bildaufnahmen 23, 25 der Kameras 20, 22 an die Zentrale 2 können ein oder mehrere der für das Absetzen der mautrelevanten Daten an die Zentrale 2 verwendeten Sendeempfänger 12, 13, 14 eingesetzt werden, bevorzugt der- bzw. dieselben Sendeempfänger.

Optional kann die OBU 8 mit einer Tastatur 29 ausgestattet sein, über welche mautrelevante Parameter in das Fahrzeuggerät 8 eingegeben werden und/oder auch manuell die Bildaufnahmen der Kameras 20, 22 veranlaßt werden können.

Die Kameras 20, 22 (bzw. der optische Objektdetektor) sind bevorzugt elektronischer Art, z.B. herkömmliche CCD-Kamerachips, welche fortlaufend - in der Art einer Filmaufnahme - aufeinanderfolgende Einzelbilder aufnehmen; einzelne oder mehrere dieser Einzelbilder können jeweils als Bildaufnahme(n) 23, 25 im obigen Sinne verwendet werden.

Anstelle von CCD-Kamerachips könnten auch sog. "Time-of-Flight"-Kamerachips eingesetzt werden, welche in der Lage sind, in Verbindung mit einer zugehörigen gesteuerten Lichtquelle 3D-Bildaufnahmen zu erzeugen. Auch ist es möglich, die Kameras 20, 22 und den optischen Objektdetektor speziell für schmalbandiges Licht, insbesondere Infrarotlicht, empfindlich zu gestalten.

## Patentansprüche

1. Fahrzeuggerät für ein Straßenmautsystem (1), mit
zumindest einem Sendeempfänger (12 - 14) zum Absetzen von mautrelevanten Daten an Sendeempfangsstationen (5, 7) zur Weiterleitung an eine Zentrale (2) des Straßenmautsystems (1) und
zumindest einer Kamera (22), welche auf eine Umgebung vor einem das Fahrzeuggerät (8) mitführenden Fahrzeug (9) gerichtet ist und zumindest eine Bildaufnahme (25) zumindest eines Ausschnitts der Umgebung erstellen kann,
**dadurch gekennzeichnet, dass** die Kamera (22) zusammen mit einem Mikroprozessor (11) des Fahrzeuggeräts (8) einen optischen Objektdetektor bildet, der fortlaufend aufeinanderfolgende Bildaufnahmen (25) erstellt und darin mit Hilfe von Bildverarbeitungsmitteln das Auftreten eines in einer bewegten Umgebung des Fahrzeugs (9) etwa stationär bleibenden sichtbaren Objekts (26) detektiert und bei Detektion eines solchen Objekts (26) veranlasst, dass das Fahrzeuggerät eine oder mehrere Bildaufnahme(n) in einem Speicher (27) des Fahrzeuggeräts (8) für eine spätere Stapelübertragung zur Zentrale (2) des Straßenmautsystems (1) sammelt.

2. Fahrzeuggerät nach Anspruch 1, **dadurch gekennzeichnet, dass** der Kamera (20) eine Auswerteeinrichtung (11) nachgeschaltet ist, welche Kennzeichen von Fremdfahrzeugen (26) in der Bildaufnahme (25) detektiert.

3. Fahrzeuggerät nach Anspruch 2, **dadurch gekennzeichnet, dass** die Auswerteeinrichtung (11) die detektierten Kennzeichen in der Bildaufnahme (25) unkenntlich macht bzw. anonymisiert.

4. Fahrzeuggerät nach einem der Ansprüche 1 bis 3, **dadurch gekennzeichnet, dass** es im Bereich der Windschutzscheibe (18) des Fahrzeugs (9) befestigbar ist und die Kamera (22) auf seiner der Windschutzscheibe (18) zugewandten Vorderseite (21) angeordnet ist.

5. Fahrzeuggerät nach einem der Ansprüche 1 bis 4, **dadurch gekennzeichnet, dass** zumindest eine weitere Kamera (20) auf den Fahrgastraum des Fahrzeugs (9) gerichtet ist, welche zumindest eine weitere Bildaufnahme (23) erstellt.

6. Fahrzeuggerät nach Anspruch 5, **dadurch gekennzeichnet, dass** der weiteren Kamera (20) eine Auswerteeinrichtung (11) nachgeschaltet ist, welche Fahrzeuginsassen (24) in der weiteren Bildaufnahme (23) detektiert und bevorzugt zählt.

7. Fahrzeuggerät nach Anspruch 6, **dadurch gekennzeichnet, dass** die Auswerteeinrichtung (11) die detektierten Fahrzeuginsassen (24) in der weiteren Bildaufnahme unkenntlich macht bzw. anonymisiert.

8. Fahrzeuggerät nach einem der Ansprüche 5 bis 7, **dadurch gekennzeichnet, dass** es im Bereich der Windschutzscheibe (18) des Fahrzeugs (9) befestigbar ist und die weitere Kamera (20) auf seiner der Windschutzscheibe (18) abgewandten Rückseite (19) angeordnet ist.

9. Fahrzeuggerät nach einem der Ansprüche 1 bis 8, **dadurch gekennzeichnet, dass** die Kamera (22) auch zu periodischen, vordefinierten oder zufälligen Zeitpunkten jeweils eine oder mehrere Bildaufnahme(n) (23, 25) erstellt.

10. Fahrzeuggerät nach einem der Ansprüche 1 bis 9, **dadurch gekennzeichnet, dass** die Kamera (22) auch auf eine über den Sendeempfänger (12 - 14) erhaltene Anforderung hin zumindest eine Bildaufnahme (23, 25) erstellt.

11. Fahrzeuggerät nach einem der Ansprüche 1 bis 10, **dadurch gekennzeichnet, dass** das Fahrzeuggerät (8) einen Objektdetektor (14, 22) aufweist, welcher bei Detektion eines vorgegebenen Objekts (16', 16", 26) in der Nähe des Fahrzeugs (9) die Kamera (22) zu(r) Bildaufnahme(n) (23, 25) veranlaßt.

12. Fahrzeuggerät nach Anspruch 11, **dadurch gekennzeichnet, dass** der Objektdetektor ein RFID- oder DSRC-Detektor (14) zur Funkerkennung eines RFID- oder DSRC-Objekts (16') ist.

13. Fahrzeuggerät nach einem der Ansprüche 1 bis 12, **dadurch gekennzeichnet, dass** das Fahrzeuggerät (8) einen Beschleunigungssensor (28) enthält, welcher bei einer schwellwertüberschreitenden Beschleunigung die Kamera (22) zu(r) Bildaufnahme(n) (23, 25) veranlasst.

14. Fahrzeuggerät nach einem der Ansprüche 1 bis 13, **dadurch gekennzeichnet, dass** das Fahrzeuggerät (8) einen Satellitennavigationsempfänger (15) enthält, um die Bildaufnahme(n) (23, 25) mit Orts- und Zeitdaten ihrer Erstellung zu versehen.

15. Fahrzeuggerät nach einem der Ansprüche 1 bis 14, **dadurch gekennzeichnet, dass** der Sendeempfänger (12, 13) ein DSRC-, WAVE- oder Mobilfunk-Sendeempfänger ist.

16. Fahrzeuggerät nach einem der Ansprüche 1 bis 15, **dadurch gekennzeichnet, dass** die Kamera (22) und/oder der optische Detektor (22) für schmalbandiges Licht, bevorzugt Infrarotlicht, ausgebildet sind.

17. Fahrzeuggerät nach einem der Ansprüche 1 bis 16, **dadurch gekennzeichnet, dass** die Kamera (22) und/oder der optische Detektor durch eine Time-of-Flight-Kamera gebildet sind.

18. Ein Verfahren zur Kontrolle von Fahrzeugen mittels eines Fahrzeuggeräts nach Anspruch 1, umfassend:
Richten der Kamera (22) des Fahrzeuggeräts (8) auf eine Umgebung vor einem das Fahrzeuggerät mitführenden Fahrzeug (9) ;
Erstellen, mittels des Objektdetektors, fortlaufend aufeinanderfolgender Bildaufnahmen (25) und darin
Detektieren, mittels des Objektdetektors mit Hilfe von Bildverarbeitungsmitteln, des Auftretens eines in einer bewegten Umgebung des Fahrzeugs (9) etwa stationär bleibenden sichtbaren Objekts (26) und, im Falle der Detektion eines solchen Objekts (26);
Senden einer oder mehrerer Bildaufnahme(n) (25) mit Hilfe des Sendeempfängers (12 - 14) des Fahrzeuggeräts (8), nach Sammeln in einem Speicher des Fahrzeuggeräts, in späterer Stapelübertragung an eine Zentrale (2) des Straßenmautsystems (1) ; und
Auswerten der Bildaufnahme(n) (25) in der Zentrale (2) des Straßenmautsystems (1).

## Claims

1. An onboard unit for a road toll system (1) with:
at least one transceiver (12 - 14) for transmitting toll-relevant data to transceiver stations (5, 7) for forwarding to a central processing unit (2) of the road toll system (1); and
at least one camera (22), which is directed towards an environment in front of a vehicle (9) carrying the onboard unit (8) and can create at least one image recording (25) of at least one section of the environment;
**characterized in that** the camera (22), together with a microprocessor (11) of the onboard unit (8), forms an optical object detector, which continuously records consecutive image recordings (25) and, therein, detects, by means of image processing elements, the presence of a visible object (26) that may be remaining stationary in a moving environment of the vehicle (9) and upon detection of such an object (26) causes the onboard unit to collect one or more image recording(s) in a memory (27) of the onboard unit (8) for a later batch transfer to the central processing unit (2) of the road toll system (1).

2. The onboard unit according to claim 1, **characterised in that** an evaluation unit (11), which detects licence plate numbers of other vehicles (26) in the image recording (25), is connected down-line of the camera (20).

3. The onboard unit according to claim 2, **characterised in that** the evaluation unit (11) obscures the detected licence plate numbers or renders them anonymous in the image recording (25).

4. The onboard unit according to one of claims 1 to 3, **characterised in that** it can be fastened in the region of the windscreen (18) of the vehicle (9) and the camera (22) is arranged on its front side (21) facing the windscreen (18).

5. The onboard unit according to one of claims 1 to 4, **characterised in that** at least one further camera (20) is directed towards the passenger compartment of the vehicle (9), which camera creates at least one further image recording (23).

6. The onboard unit according to claim 5, **characterised in that** an evaluation unit (11), which detects the vehicle passengers (24) in the further image recording (23) and preferably counts them, is connected down-line of the further camera (20).

7. The onboard unit according to claim 6, **characterised in that** the evaluation unit (11) obscures the detected vehicle passengers (24) or renders the anonymous in the further image recording.

8. The onboard unit according to one of claims 5 to 7, **characterised in that** it can be fastened in the region of the windscreen (18) of the vehicle (9) and the further camera (20) is arranged on its rear side (19) remote from the windscreen (18).

9. The onboard unit according to one of claims 1 to 8, **characterised in that** the camera (22) also creates one or more image recording(s) (23, 25) in each case at periodic, predefined or random instants in time.

10. The onboard unit according to one of claims 1 to 9, **characterised in that** the camera (22) also creates at least one image recording (23, 25) in response to a request received via the transceiver (12 - 14).

11. The onboard unit according to one of claims 1 to 10, **characterised in that** the onboard unit (8) has an object detector (14, 22), which upon detection of a given object (16', 16", 26) in the vicinity of the vehicle (9) causes the camera (22) to record (an) image(s) (23, 25).

12. The onboard unit according to claim 11, **characterised in that** the object detector is an RFID or DSRC detector (14) for wireless recognition of an RFID or DSRC object (16').

13. The onboard unit according to one of claims 1 to 12, **characterised in that** the onboard unit (8) contains an acceleration sensor (28), which in the event of an acceleration exceeding a threshold causes the camera (22) to record (an) image(s) (23, 25).

14. The onboard unit according to one of claims 1 to 13, **characterised in that** the onboard unit (8) contains a satellite navigation receiver (15) to provide the image recording(s) (23, 25) with the location and time data of its/their creation.

15. The onboard unit according to one of claims 1 to 14, **characterised in that** the transceiver (12, 13) is a DSRC, WAVE or mobile communications transceiver.

16. The onboard unit according to one of claims 1 to 15, **characterised in that** the camera (22) and/or the optical detector (22) are configured for narrow-band light, preferentially infrared light.

17. The onboard unit according to one of claims 1 to 16, **characterised in that** the camera (22) and/or the optical detector are formed by a time of flight camera.

18. A method for monitoring vehicles by means of an onboard unit according to claim 1, comprising:
directing the camera (22) of the onboard unit (8) onto an environment in front of a vehicle (9) carrying the onboard unit;
creating, by means of the object detector, continuously consecutive image recordings (25) and therein
detecting, by means of the object detector with the aid of image processing elements, the presence of a visible object (26) that may be remaining stationary in a moving environment of the vehicle (9) and in the event of detecting such an object (26);
transmitting one or more image recording(s) (25), after collecting them in a memory of the onboard unit, to a central processing unit (2) of the road toll system (1) by means of the transceiver (12 - 14) of the onboard unit (8) in a later batch transfer; and
evaluating the image recording(s) (25) in the central processing unit (2) of the road toll system (1).

## Revendications

1. Appareil de véhicule pour un système de péage routier (1), comprenant
au moins un récepteur-émetteur (12 - 14) servant transmettre des données significatives relatives au péage à des stations réceptrices-émettrices (5, 7) à transférer à une centrale (2) du système de péage routier (1) et
au moins une caméra (22), qui est orientée sur l'environnement devant un véhicule (9) transportant l'appareil de véhicule (8) et qui peut réaliser au moins une prise de vue (25) d'au moins un secteur de l'environnement,
**caractérisé en ce que** la caméra (22) forme conjointement avec un microprocesseur (11) de l'appareil de véhicule (8) un détecteur optique d'objets, qui effectue en permanence des prises de vue (25) successives et y détecte, à l'aide de moyens de traitement d'images l'apparition d'un objet (26) visible et demeurant quasiment stationnaire dans un environnement déplacé du véhicule (9) et amène, lors de la détection d'un objet (26) de ce type, l'appareil de véhicule à collecter une ou plusieurs prise(s) de vue dans une mémoire (27) de l'appareil de véhicule (8) pour une transmission ultérieure groupée à la centrale (2) du système de péage routier (1).

2. Appareil de véhicule selon la revendication 1, **caractérisé en ce qu'**un dispositif d'analyse (11), qui détecte les plaques d'immatriculation d'autres véhicules (26) dans la prise de vue (25), est installée en aval de la caméra (20).

3. Appareil de véhicule selon la revendication 2, **caractérisé en ce que** le dispositif d'analyse (11) rend non identifiables ou anonymes les plaques d'immatriculation détectées sur la prise de vue (25).

4. Appareil de véhicule selon l'une quelconque des revendications 1 à 3, **caractérisé en ce que** ledit appareil de véhicule peut être fixé dans la zone du pare-brise (18) du véhicule (9), et **en ce que** la caméra (22) est disposée sur son côté avant (21) tourné vers le pare-brise (18).

5. Appareil de véhicule selon l'une quelconque des revendications 1 à 4, **caractérisé en ce qu'**au moins une caméra supplémentaire (20) est orientée sur l'habitacle du véhicule (9), laquelle caméra réalise au moins une prise de vue supplémentaire (23).

6. Appareil de véhicule selon la revendication 5, **caractérisé en ce qu'**un dispositif d'analyse (11), qui détecte, et de préférence compte, des passagers du véhicule (24) dans la prise de vue supplémentaire (23), est installée en aval de la caméra supplémentaire (20).

7. Appareil de véhicule selon la revendication 6, **caractérisé en ce que** le dispositif d'analyse (11) rend non identifiables ou anonymes les passagers (24) détectés dans la prise de vue supplémentaire.

8. Appareil de véhicule selon l'une quelconque des revendications 5 à 7, **caractérisé en ce que** ledit appareil de véhicule peut être fixé dans la zone du pare-brise (18) du véhicule (9), et **en ce que** la caméra supplémentaire (20) est disposée sur son côté arrière (19) opposé au pare-brise (18).

9. Appareil de véhicule selon l'une quelconque des revendications 1 à 8, **caractérisé en ce que** la caméra (22) réalise également à des intervalles périodiques, prédéfinis ou aléatoires, respectivement une ou plusieurs prise(s) de vue (23, 25).

10. Appareil de véhicule selon l'une quelconque des revendications 1 à 9, **caractérisé en ce que** la caméra (22) réalise également au moins une prise de vue (23, 25) sur instruction reçue par l'intermédiaire du récepteur-émetteur (12 - 14).

11. Appareil de véhicule selon l'une quelconque des revendications 1 à 10, **caractérisé en ce que** l'appareil de véhicule (8) présente un détecteur d'objets (14, 22), qui amène la caméra (22) à réaliser une prise de vue/des prises de vue (23, 25) lors de la détection d'un objet (16', 16", 26) prédéfini à proximité du véhicule (9).

12. Appareil de véhicule selon la revendication 11, **caractérisé en ce que** le détecteur d'objets est un détecteur RFID ou DSRC (14) servant à l'identification radio d'un objet RFID ou DSRC (16').

13. Appareil de véhicule selon l'une quelconque des revendications 1 à 12, **caractérisé en ce que** l'appareil de véhicule (8) comporte un capteur d'accélération (28), qui amène la caméra (22) à réaliser une prise de vue/des prises de vue (23, 25) lorsque l'accélération dépasse une valeur seuil.

14. Appareil de véhicule selon l'une quelconque des revendications 1 à 13, **caractérisé en ce que** l'appareil de véhicule (8) comporte un récepteur de navigation par satellites (15) afin d'attribuer à la prise de vue/aux prises de vue (23, 25) des informations relatives au lieu et à l'heure de leur réalisation.

15. Appareil de véhicule selon l'une quelconque des revendications 1 à 14, **caractérisé en ce que** l'émetteur-récepteur (12, 13) est un émetteur-récepteur DSRC, WAVE ou radiotéléphonique.

16. Appareil de véhicule selon l'une quelconque des revendications 1 à 15, **caractérisé en ce que** la caméra (22) et/ou le détecteur (22) optique sont réalisés pour de la lumière à bande étroite, de manière préférée pour de la lumière infrarouge.

17. Appareil de véhicule selon l'une quelconque des revendications 1 à 16, **caractérisé en ce que** la caméra (22) et/ou le détecteur optique sont formés par une caméra fonctionnant sur le principe du temps de vol.

18. Procédé servant à contrôler des véhicules au moyen d'un appareil de véhicule selon la revendication 1, comprenant :
l'orientation de la caméra (22) de l'appareil de véhicule (8) sur un environnement devant un véhicule (9) transportant l'appareil de véhicule ;
la réalisation de prises de vue (25) successives en continu au moyen du détecteur d'objets et ;
la détection, au moyen du détecteur d'objets à l'aide de moyens de traitement d'images, de l'apparition d'un objet (26) visible demeurant quasiment stationnaire dans un environnement déplacé du véhicule (9) et, dans le cas de la détection d'un tel objet (26) ;
l'envoi d'une ou de plusieurs prise(s) de vue (25) à l'aide du récepteur-émetteur (12 - 14) de l'appareil de véhicule (8), après la collecte dans une mémoire de l'appareil de véhicule, au cours d'une transmission ultérieure groupée à une centrale (2) du système de péage routier (1) ; et
l'analyse de la prise de vue/des prises de vue (25) dans la centrale (2) du système de péage routier (1).
